# EUROPÄISCHE PATENTSCHRIFT

(11) **EP 3 587 246 B1**
(45) Veröffentlichungstag und Bekanntmachung des Hinweises auf die Patenterteilung: **28.04.2021**
(21) Anmeldenummer: 19176186.5
(22) Anmeldetag: 23.05.2019
(51) Int. Cl.: B64C 1/40, F03G 7/06

(54) **ISOLIERPAKET MIT TROCKNUNGSÖFFNUNGEN FÜR DIE THERMISCHE UND AKUSTISCHE ISOLIERUNG EINES LUFTFAHRZEUGS**
INSULATION PACK WITH DRYING OPENINGS FOR THERMAL AND ACOUSTIC INSULATION OF AN AIRCRAFT
PAQUET ISOLANT À OUVERTURES DE SÉCHAGE POUR L'ISOLATION THERMIQUE ET ACOUSTIQUE D'UN AÉRONEF

(30) Priorität: 28.06.2018 DE 102018115614
(43) Veröffentlichungstag der Anmeldung: 01.01.2020
(73) Patentinhaber: Airbus Operations GmbH, 21129 Hamburg (DE)
(72) Erfinder: Wesseloh, Marc, 21129 Hamburg (DE); Müller, Rainer, 21129 Hamburg (DE); Kerber, Markus, 21129 Hamburg (DE)

(56) Entgegenhaltungen:
- DE-A1-102010 052 671
- DE-C1- 10 155 925
- KR-A- 20110 088 280
- US-A1- 2007 184 238
- US-A1- 2017 320 633

## Beschreibung

### TECHNISCHES GEBIET

Die Erfindung betrifft ein Isolierpaket für die thermische und akustische Isolierung eines Luftfahrzeugs sowie ein Flugzeug mit einem Flugzeugrumpf mit einem darin gebildeten Innenraum, in dem mindestens ein solches Isolierpaket angeordnet ist.

### HINTERGRUND DER ERFINDUNG

Zum thermischen und akustischen Isolieren von Luftfahrzeugen werden üblicherweise Isolierpakete mit einem aufgebauschten Isoliermaterial, das von einer Umhüllungsfolie umgeben ist, eingesetzt. Um zu vermeiden, dass die Umhüllungsfolie beim Steigflug aufgrund des sinkenden Kabinendrucks platzt, ist vorgesehen, Entlüftungsöffnungen zu integrieren. In Verbindung mit einer im Reiseflug sehr kalten Außenhaut kann in Rumpfbereichen nahe der Außenhaut Kondensation eintreten, die bei nicht luftdicht verschlossenen Isolierpaketen zu einem Ansammeln von Kondensationswasser in diesen führen könnte.

Es sind verschiedene Maßnahmen bekannt, ein Ansammeln von Feuchtigkeit in Isolierpaketen zu verhindern. Aus DE 10 2010 052 671 A1 ist etwa eine Isolierungsanordnung mit Isolierpaketen bekannt, bei der sämtliche Umhüllungsfolien der Isolierpakete luft- und wasserdicht ausgeführt sind, wobei die Isolierpakete die Umhüllungsfolien durchbrechende Ventilationsöffnungen aufweisen, die derart angeordnet sind, dass sie in einer Fluidverbindung mit einem zwischen der Isolierungsanordnung und der Rumpfwandung gebildeten Spalt stehen. Diese Ventilationsöffnungen nehmen lediglich Luft aus einem sehr trockenen Bereich auf, was die Ansammlung von Kondenswasser in den Isolierpaketen deutlich reduziert.

### ZUSAMMENFASSUNG DER ERFINDUNG

Es ist Aufgabe der Erfindung, ein Isolierpaket für die thermische und akustische Isolierung eines Luftfahrzeugs vorzuschlagen, das ebenso die Ansammlung von Kondenswasser verhindert und bei dennoch angefallenem Kondenswasser in der Lage ist, dieses durch Trocknen wieder abzuführen.

Die Aufgabe wird gelöst durch ein Isolierpaket mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Isolierpaket für die thermische und akustische Isolierung eines Luftfahrzeugs vorgeschlagen, das Isolierpaket aufweisend eine Matte aus einem Isoliermaterial, und eine Umhüllungsfolie, die die Matte vollständig umhüllt, wobei die Umhüllungsfolie mehrere Trocknungsöffnungen aufweist, die jeweils durch eine mit der Umhüllungsfolie verbundene Abdeckung verschließbar sind, wobei jede Abdeckung zumindest bereichsweise einen Beschichtungsstoff aufweist, dessen Flächenausdehnung sich in Abhängigkeit von der relativen Luftfeuchtigkeit der Luft im Innern des Isolationspakets ändert, so dass sich jede Abdeckung in Abhängigkeit von dieser Luftfeuchtigkeit relativ zu der Umhüllungsfolie bewegt, und wobei die Abdeckungen dazu angepasst sind, unterhalb einer vorbestimmten relativen Luftfeuchtigkeit eine Orientierung einzunehmen, die die zugehörige Trocknungsöffnung verschließt und bei höheren relativen Luftfeuchtigkeiten die zugehörige Trocknungsöffnung zumindest teilweise öffnet.

Der grundlegende Aufbau des erfindungsgemäßen Isolierpakets ist mit dem eines herkömmlichen Isolierpakets vergleichbar. Es wird eine Matte aus einem insbesondere aufgebauschten Isoliermaterial bereitgestellt, die mit der Umhüllungsfolie umhüllt ist. Die Umhüllungsfolie kann auf unterschiedlichen Materialien basieren. Besonders sind Kunststoffe geeignet, die biegeweich sind. Es sind einlagige und mehrlagige Umhüllungsfolien denkbar. Bedarfsweise können diese auch eine Gewebelage aufweisen. Bevorzugt ist die Umhüllungsfolie oder zumindest eine der in der Umhüllungsfolie vorhandene Lage aus einem fluiddichten Material hergestellt.

Die Umhüllungsfolie kann, wie bekannte Umhüllungsfolien, zumindest bereichsweise mit mindestens einer Ventilationsöffnung versehen sein. Diese erlaubt einen Druckausgleich im Innern des Isolierpakets, um einer Beschädigung des Isolierpakets vorzubeugen und ein Aufblähen des Isolierpakets während des Steigflugs zu unterbinden.

Zusätzlich hierzu sind erfindungsgemäß die Trocknungsöffnungen vorgesehen, die durch eine Abdeckung verschließbar sind. Der Zweck dieser zusätzlichen Trocknungsöffnungen liegt darin, bedarfsweise eine Trocknung des Isolierpakets durchzuführen, indem Luft mit einer geringeren Luftfeuchtigkeit als in der Isoliermatte in dieses hinein geleitet werden kann. Zum bedarfsweisen Öffnen der Trocknungsöffnungen sind die Abdeckungen vorgesehen, die in Abhängigkeit einer relativen Luftfeuchtigkeit in der Nähe des Isoliermaterials selbsttätig öffnen oder schließen.

Die Abdeckung ist ein flächiges Element, das derart dimensioniert ist, eine zugehörige Trocknungsöffnung zu verschließen. Eine Abdeckung kann insbesondere als Flächenelement ausgeführt werden, das dazu in der Lage ist, eine Trocknungsöffnung zu schließen. Die Ausgestaltung der Abdeckung korreliert folglich mit der Ausgestaltung der zugehörigen Trocknungsöffnung. Legt sich die Abdeckung auf die Trocknungsöffnung, ist diese verschlossen.

Eine Abdeckung kann für diese Aufgabe zumindest bereichsweise einen Beschichtungsstoff aufweisen, dessen Eigenschaften sich bei Aufnahme von Feuchtigkeit aus der Luft ändern. Bei zunehmender relativer Luftfeuchtigkeit an der zugehörigen Trockungsöffnung soll die Abdeckung zumindest teilweise geöffnet und bei abnehmender Luftfeuchtigkeit wieder geschlossen werden.

Die Beschichtung ist aus einer Reihe von Materialien ausgewählt, welche hygroskopisch sind und bei Kontakt mit Feuchtigkeit aus der Umgebung diese binden. Bei geeigneter Auswahl des Beschichtungsstoffs kann dieser eine Volumenzunahme durchführen, aus der eine Kraft resultiert, die die Abdeckung bewegt. Die Abdeckung weist insgesamt folglich ein hygromorphes Verhalten auf.

Während die Beschichtung an einer der Isoliermatte zugewandten Seite der Abdeckung angeordnet sein könnte, wäre zusätzlich dazu auch eine weitere Beschichtung an einer von der Isoliermatte abgewandten Seite der Abdeckung möglich. Diese könnte etwa eine Volumenabnahme bei Kontakt mit Luft mit niedriger relativer Luftfeuchtigkeit durchführen, so dass auf dieser Seite ebenso eine Kraft auf die Abdeckung ausgeübt wird. Das geeignete Material wäre dann derart zu wählen, dass eine Abnahme der relativen Luftfeuchtigkeit zu einer Kontraktion des Beschichtungsstoffs führt.

Es ist vorstellbar, die erfindungsgemäß realisierten Trocknungsöffnungen lediglich bereichsweise in einem streifenförmigen Abschnitt an dem Isolierpaket vorzusehen. Dieser könnte einen doppellagigen Aufbau aufweisen und eine ansonsten einlagige Umhüllungsfolie ergänzen.

Das Isolierpaket kann demzufolge ein ebenso geringes Gewicht aufweisen wie verbreitete Isolierpakete. Dennoch ist eine bedarfsweise Trocknung ohne aktive Elemente möglich. Eine dauerhaft geöffnete Perforation ist nicht notwendig, sondern eine Selbstregelung der Trocknung des umhüllten Isoliermaterials wird auf eine sehr einfache Weise erreicht.

In einer vorteilhaften Ausführungsform ist die Abdeckung biegeweich. Die Abdeckung setzt einer Biegebewegung folglich keinen nennenswerten Widerstand entgegen. Diese Ausführung verleiht der Abdeckung insbesondere die Fähigkeit, eine Aufrollbewegung durchzuführen. Bei einer einseitigen Beschichtung, die sich mit zunehmender relativer Luftfeuchtigkeit ausdehnt, kann der Verbund aus Abdeckung und Beschichtung folglich an der Grenzfläche zwischen der Beschichtung und der Abdeckung eine Scherkraft entwickeln. Diese führt zum Rollen der Abdeckung, so dass sich diese von der Trocknungsöffnung weg bewegt.

Alternativ dazu kann die Abdeckung auch steif sein. Eine Beschichtung mit dem Beschichtungsstoff kann demzufolge auch lediglich in einem Verbindungsbereich mit der Umhüllungsfolie durchgeführt sein, der im Folgenden auch als Scharnierbereich bezeichnet wird. Bei sich ausdehnendem Beschichtungsstoff führt die Abdeckung eine Klappbewegung durch. Der Beschichtungsstoff kann sich auf eine sehr geringe Fläche beschränken und unter einem Hebelarm zu dem Scharnierbereich die Abdeckung von der Trocknungsöffnung wegdrücken.

In einer vorteilhaften Ausführungsform weist der Beschichtungsstoff einen Absorber auf, der bei Aufnahme von Feuchtigkeit sein Volumen vergrößert. Ein Absorber kann ein Stoff sein, der Feuchtigkeit aufnimmt. Insbesondere kann der Absorber ein Superabsorber sein, der dazu in der Lage ist, ein Vielfaches seines Eigengewichts an Wasser aus der Luftfeuchtigkeit aufzunehmen. Wie vorangehend dargestellt kann hierdurch eine Ausdehnung erfolgen, die zu einer Bewegung der Abdeckung führt. Besonders bevorzugt ist der Absorber reversibel quellfähig. Ein Aufquellen des Absorbers kann folglich durch Verdunstung rückgängig gemacht werden und folglich durch Volumenabnahme zu einer Schließbewegung der Abdeckungen führen. Der Beschichtungsstoff kann insgesamt aus einem solchen quellfähigen Material bestehen.

Der Beschichtungsstoff kann mindestens einen bipolaren, vernetzten Polymer aufweisen, der unter Aufnahme von Wasser ein Hydrogel bildet. Ein solches Hydrogel kann etwa Polyacrylamid oder Polyvinylpyrrolidon aufweisen, allerdings auch natürliche Polymere wie Cellulose, Amylopektin, Gelatine oder Derivate hiervon.

Der Beschichtungsstoff kann allerdings auch einen quellfähigen Copolymer aufweist. Diese könnten neben vernetzten Copolymeren auf Kaliumsalz-Basis auch Kompositmaterialien aus Thermoplasten und Elastomeren aufweisen.

Andere einsetzbare Materialien könnten unter anderem auch quellfähige Fasern aufweisen. Neben natürlichen Fasern wären auch bestimmte Kohlenstoffallotrope wie etwa Graphen denkbar. Desweiteren könnten auch verschiedene proteinbasierte Beschichtungsstoffe zu einem Quellverhalten führen.

Es ist besonders bevorzugt, die Beschichtung an einer Innenseite der Abdeckung anzuordnen. Die Innenseite ist der Matte ist damit dem Isoliermaterial zugewandt, so dass die Innenseite der Abdeckung stets direkt mit der relevanten relativen Luftfeuchtigkeit der in dem Isoliermaterial eingeschlossenen Luft konfrontiert wird. Zudem basieren die vorangehend genannten Beschichtungsstoffe auf einer Wasserabsorption, die erst in Kontakt mit der feuchten Luft zu einer Ausdehnung führen und dadurch die Abdeckung von der Isoliermaterial weg bewegen.

Die Abdeckung kann ein Vliesmaterial als Trägermaterial aufweisen. Die Abdeckung könnte dementsprechend separat von der Umhüllungsfolie gefertigt sein und ein besonders leichtes Trägermaterial aufweisen, das mit der Beschichtung versehen wird. Der Verbund aus Trägermaterial und Beschichtung sollte fluiddicht sein, so dass abhängig vom Beschichtungsstoff auch eine zusätzliche, fluiddichte Lage vorgesehen sein könnte.

Alternativ dazu kann die Abdeckung aus einem Abschnitt der Umhüllungsfolie gebildet sein, der eine mit einer Öffnungskante der zugehörigen Trocknungsöffnung zusammenfallende Kante aufweist. Die Umhüllungsfolie kann folglich durch Einschneiden der Trocknungsöffnungen integrierte Abdeckungen erhalten, wenn eine einen Scharnierbereich bildende Kante der Abdeckung in die Umhüllungsfolie übergeht. Beim Schneiden der Trocknungsöffnungen sollte daher eine Kante ausgespart werden, die anschließend die Abdeckung hält bzw. als Übergang zwischen der Umhüllungsfolie und Abdeckung fungiert.

Um zusätzlich die Dichtheit derartiger Abdeckungen zu verbessern, kann der Abschnitt randseitig eine Lasche zum Überlappen mit Rändern der Trocknungsöffnungen aufweisen. Trotz der einteiligen Fertigung können die Abdeckungen dann eine überlappende Abdichtung der Trocknungsöffhungen durchführen. Möglich wäre dies durch Verwendung zweier Folien, welche aufeinandergelegt die Umhüllungsfolie bilden, eine äußere Folie mit größeren Trocknungsöffhungen versehen ist als die innere und wobei der Abschnitt der äußeren Folie in Überlappung mit Rändern der Trocknungsöffnungen der inneren Folie gerät. Dem vorhergehenden Beispiel folgend kann die innere Folie an einer zu der Isoliermatte gewandten Seite mit dem Beschichtungsstoff versehen werden.

Es könnte sich empfehlen, die Trocknungsöffnung zumindest teilweise kreisförmig, oval oder dreieckig auszuführen. Insbesondere die dreieckige Form bietet sich an, da eine Seite des betreffenden Dreiecks mit einer Kante der Trocknungsöffnung zusammenfallen kann und eine sich hiervon beabstandet angeordnete Dreiecksspitze frei bewegbar ist. Insbesondere bei der Verwendung eines biegeweichen Materials der Abdeckung kann die entstehende Scherkraft zu einer besonders vorteilhaften Einrollbewegung, beginnend mit der Spitze des Dreiecks, eingeleitet werden.

Die Erfindung betrifft ferner ein Flugzeug, aufweisend einen Flugzeugrumpf mit einem darin gebildeten Innenraum, in dem mindestens ein vorangehend geschildertes Isolierpaket angeordnet ist.

Der Flugzeugrumpf kann etwa eine Innenseite und eine Außenseite aufweisen, wobei mehrere Isolierpakete an der Innenseite des Flugzeugrumpfs angeordnet sind und wobei die Trocknungsöffnungen an einer von dem Flugzeugrumpf abgewandten Seite der Isolierpakete angeordnet sind. Ein solches Isolierpaket kann sich als Primär-Isolierpaket oder Sekundär-Isolierpaket an Hautfeldern des Rumpfs befinden oder an einer oder mehreren zu einer Rumpfhaut gewandten Verkleidungselementen. Desweiteren können Isolierpakete auch an Strukturbauteilen, wie etwa Spanten, Längsträgern oder dergleichen, angeordnet sein.

Desweiteren kann mindestens ein Isolierpaket auch an einem Einbauelement angeordnet sein, das in dem Innenraum befestigt ist. Ein solches Einbauelement kann etwa ein Monument, ein Gepäckfach, ein Fußbodenelement, Seitenverkleidungselement, Deckenverkleidungselement oder dergleichen sein.

Insgesamt sind die Trocknungsöffnungen gezielt anzubringen, dass sie in der Lage sind, trockenere Luft aufzunehmen. Die Trocknungsöffnungen könnten hierzu in Bereichen der jeweiligen Isolierpakete angeordnet werden, die in einen Hohlraum zwischen Verkleidungselementen und Rumpfspanten oder in einen Spalt zwischen Einbauten oder dergleichen ragen. Die Trocknungsöffnungen könnten desweiteren sowohl auf einem flächigen Abschnitt der Isolierpakete und/oder in Randbereichen angeordnet sein.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt ein Isolierpaket gemäß dem Stand der Technik in einer sehr vereinfachten schematischen Darstellung.
Fig. 2a und 2b zeigen ein erfindungsgemäßes Isolierpaket mit geschlossenen Trocknungsöffnungen.
Fig. 3a und 3b zeigen ein erfindungsgemäßes Isolierpaket mit offenen Trocknungsöffhungen, wobei in Fig. 3b die Trocknungsöffnungen in einem eingesetzten Streifen angebracht sind.
Fig. 4 zeigt eine Trocknungsöffnung mit einer Abdeckung in einer Detaildarstellung, wobei die Trocknungsöffnung geschlossen ist.
Fig. 5 zeigt eine Trocknungsöffnung mit einer Abdeckung in einer Detaildarstellung, wobei die Trocknungsöffnung geöffnet ist.
Fig. 6 zeigt eine Trocknungsöffnung, die mit einer steifen Abdeckung verschließbar ist.
Fig. 7 zeigt ein Flugzeug mit einem Flugzeugrumpf, in dem ein Innenraum mit mindestens einem Isolierpaket ausgestattet ist.

### DETAILLIERTE DARSTELLUNG EXEMPLARISCHER AUSFÜHRUNGSFORMEN

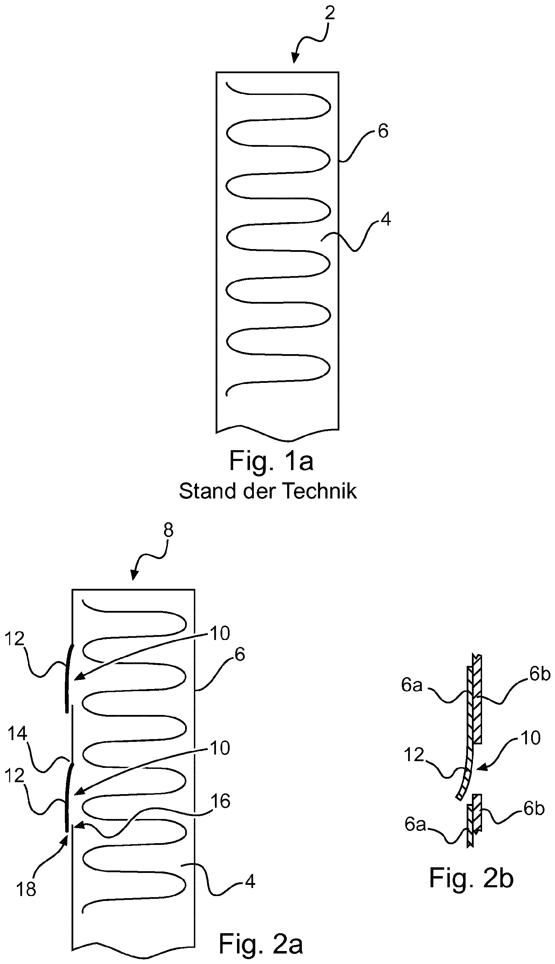

Fig. 1 zeigt den grundlegenden Aufbau eines Isolierpakets 2 gemäß dem Stand der Technik. Das Isolierpaket 2 weist eine Matte 4 aus einem Isoliermaterial und eine Umhüllungsfolie 6 auf, die die Matte 4 umhüllt. Das Material der Matte 4 ist aufgebauscht und kann Glaswolle, Schaumstoff oder ähnliches aufweisen. Die Umhüllungsfolie 6 ist bevorzugt fluiddicht ausgeführt, so dass ein Feuchtigkeitsdurchtritt zwischen einer Umgebung des Isolierpakets 2 und der Matte 4 durch die Umhüllungsfolie 6 nicht möglich ist.

Fig. 2a zeigt ein erfindungsgemäßes Isolierpaket 8, welches basierend auf dem Isolierpaket 2 gemäß dem Stand der Technik aufgebaut ist. Allerdings sind hier zusätzliche Trocknungsöffnungen 10 in Form von Löchern in der Umhüllungsfolie 6 vorgesehen, die jeweils durch eine Abdeckung 12 verschließbar sind. Die Abdeckungen 12 erstrecken sich von einer ersten Öffnungskante 14 bis über eine gegenüberliegende zweite Öffnungskante 16, so dass eine Überlappung 18 zumindest mit Teilen einer Öffnungskontur der Trocknungsöffnungen 10 erfolgt. In dem gezeigten Fall ist die Stärke der Abdeckungen 14 in derselben Größenordnung wie die der Umhüllungsfolie 6 und kann aus demselben Material bestehen.

Bevorzugt kann die Abdeckung 12 aus der Umhüllungsfolie 6 ausgeschnitten sein. Fig. 2b stellt dar, wie dennoch eine Überlappung herstellbar ist. Ist die Umhüllungsfolie 6 etwa aus zwei Lagen 6a und 6b hergestellt, kann die Abdeckung 12 in einer äußeren Lage 6a angeordnet sein und die in einer inneren Lage 6b befindliche Trocknungsöffnung 10 überlappend verschließen. Dazu ist die Trocknungsöffnung 10 kleiner zu dimensionieren als die Erstreckung der Abdeckung 12.

Das erfindungsgemäße Isolierpaket 8 kann eine Vielzahl solcher Trocknungsöffnungen 10 aufweisen, die jeweils mit einer zugehörigen Abdeckung 12 abgedeckt sind. Die Erstreckung der Trocknungsöffnungen 10 ist jeweils relativ klein, so dass eine freie Bewegung der Abdeckungen 12 im eingebauten Zustand des Isolierpakets 8 ohne weiteres möglich ist. Es ist denkbar, Öffnungsweiten von 1 bis 25 mm vorzusehen, besonders bevorzugt 1 bis 10 mm und insbesondere 1 bis 5 mm.

Um eine großflächige Überdeckung des Isolierpakets 8 mit derartigen Trocknungsöffnungen 10 zu erreichen, kann folglich eine relativ große Anzahl solcher Trocknungsöffnungen 10 verwendet werden. Ein Isolierpaket 8 könnte mehr als zehn, insbesondere jedoch hunderte, tausende oder mehr derartiger Trocknungsöffnungen 10 enthalten. Dies kann allerdings auch von den Einbaubedingungen des jeweiligen Isolierpakets 8 abhängen.

Zusätzlich zu den Trocknungsöffnungen 10 können des Weiteren auch Entlüftungsöffnungen vorgesehen sein, die in den Figuren nicht gezeigt sind und insbesondere zum Ausgleichen von Druckunterschieden im Innern des Isolierpakets 8 eingesetzt werden.

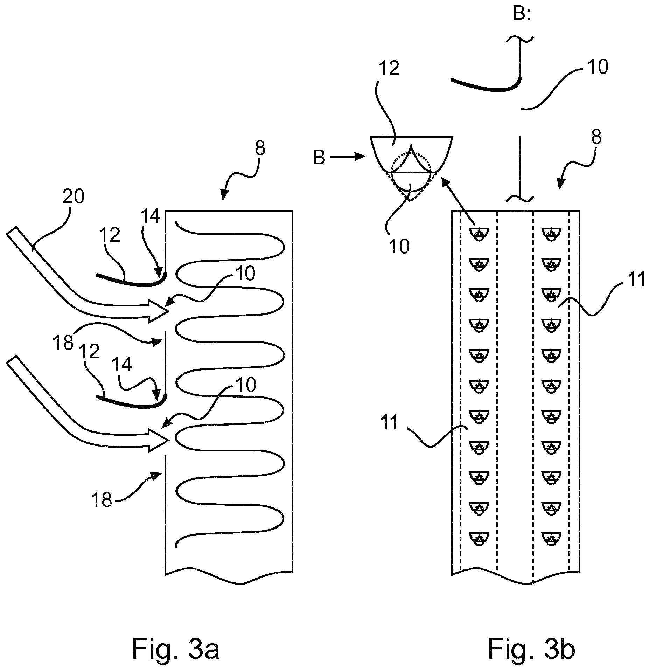

Fig. 3a zeigt die Abdeckungen 12 in einem geöffneten Zustand, in denen sie sich von der zugehörigen Trocknungsöffnung 10 nach außen hin erstrecken. Hierdurch kann Luft 20 in das Innere des Isolierpakets 8 eindringen. Die von außen in das Isolierpaket 8 eindringende Luft ist in bestimmten Fällen stets trockener als die in dem Isolierpaket eingeschlossene Luft und hierdurch eine Trocknung hervorrufen bzw. trockene Luft einleiten, so dass die relative Luftfeuchtigkeit im Innern des Isolierpakets 8 sinkt.

Fig. 3b zeigt das Isolierpaket 8 in einer Vorderansicht mit zwei Detailansichten. Hier sind die Trocknungsöffnungen 10 in zwei Streifen 11 realisiert, die sich an Rändern des Isolierpakets 8 erstrecken. Die Streifen 11 können eine herkömmliche Umhüllungsfolie 6 an den Rändern des Isolierpakets ersetzen und den Aufwand der Herstellung senken, da die Umhüllungsfolie 6 nicht vollständig mit Trocknungsöffnungen 10 versetzt sein muss und insbesondere nicht vollständig zweilagig ausgeführt ist. Beispielhaft weisen die Abdeckungen 12 eine im Wesentlichen dreieckige Gestalt auf und sind in Fig. 3b in einem zumindest teilweise aufgerollten Zustand zu sehen.

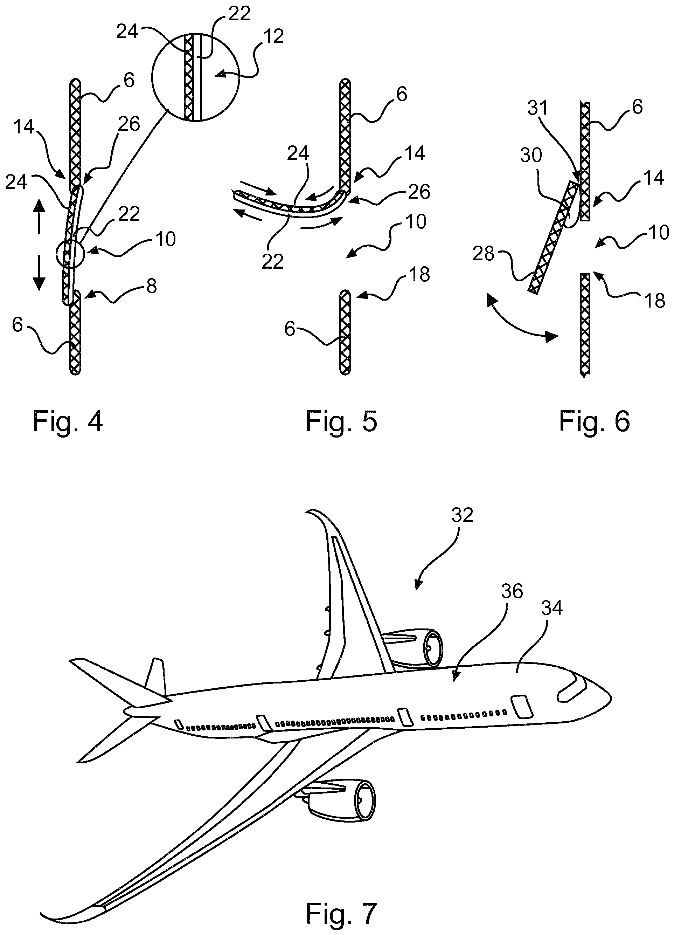

Das Funktionsprinzip der Abdeckungen 12 kann in den Fig. 4 und 5 erkannt werden. Eine Abdeckung 12 weist eine einseitig aufgebrachte Beschichtung 22 auf, die aus einem hygroskopischen bzw. quellfähigen Material besteht und die Eigenschaft besitzt, bei zunehmender Feuchtigkeit eine Ausdehnung durchzuführen. Durch die Ausdehnung ist die Länge der Beschichtung 22 größer als die Länge einer Folie 24 oder einer anderen Trägerschicht, so dass es zu der Aufrollbewegung in Fig. 5 kommt. Das Abdeckelement 12 entfernt sich folglich von der Trocknungsöffnung 10 (siehe Fig. 5). Ist die Beschichtung 22 nicht gequollen, ist die Abdeckung 12 geschlossen (siehe Fig. 4). An der ersten Öffnungskante 14 wird eine Art Scharnierbereich 26 gebildet, um den herum sich die Abdeckung 12 öffnet.

Fig. 6 zeigt eine Abwandlung mit einer steifen Abdeckung 28, die mit der Umhüllungsfolie 6 verbunden ist und zumindest bereichsweise einen Beschichtungsstoff 30 aufweist. Durch Aufquellen des Beschichtungsstoffs 30 kann die Abdeckung 28 von der zweiten Öffnungskante 18 weg geklappt werden. Die Abdeckung 28 könnte hierzu einseitig über einen Materialstreifen an der Umhüllungsfolie 6 angeordnet sein, so dass sich dort ein Scharnierbereich 31 ergibt.

Fig. 7 zeigt schließlich ein Flugzeug 32 mit einem Rumpf 34 und einem darin gebildeten Innenraum 36, in dem mindestens ein erfindungsgemäßes Isolierpaket 8 angeordnet ist.

Ergänzend sei darauf hingewiesen, dass "aufweisend" keine anderen Elemente oder Schritte ausschließt, und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Isolierpaket (8) für die thermische und akustische Isolierung eines Luftfahrzeugs (32), aufweisend
- eine Matte (4) aus einem Isoliermaterial, und
- eine Umhüllungsfolie (6), die die Matte (4) vollständig umhüllt,
wobei die Umhüllungsfolie (6) mehrere Trocknungsöffhungen (10) aufweist, die jeweils durch eine mit der Umhüllungsfolie (6) verbundene Abdeckung (12, 28) verschließbar sind,
wobei jede Abdeckung (12, 28) zumindest bereichsweise einen Beschichtungsstoff (22, 30) aufweist, dessen Flächenausdehnung sich in Abhängigkeit von der relativen Luftfeuchtigkeit der Luft im Innern des Isolationspakets (8) ändert, so dass sich jede Abdeckung (12, 28) in Abhängigkeit von dieser Luftfeuchtigkeit relativ zu der Umhüllungsfolie (6) bewegt, und
wobei die Abdeckungen (12, 28) dazu angepasst sind, unterhalb einer vorbestimmten relativen Luftfeuchtigkeit eine Orientierung einzunehmen, die die zugehörige Trocknungsöffnung (10) verschließt und bei höheren relativen Luftfeuchtigkeiten die zugehörige Trocknungsöffnung (10) zumindest teilweise öffnet.

2. Isolierpaket (8) nach Anspruch 1, wobei die Abdeckung (12) biegeweich ist.

3. Isolierpaket (8) nach Anspruch 1, wobei die Abdeckung (28) steif ist.

4. Isolierpaket (8) nach einem der vorhergehenden Ansprüche, wobei der Beschichtungsstoff (22, 30) einen Absorber aufweist, der bei Aufnahme von Feuchtigkeit sein Volumen vergrößert.

5. Isolierpaket (8) nach Anspruch 4, wobei der Beschichtungsstoff (22, 30) reversibel quellfähig ist.

6. Isolierpaket (8) nach einem der vorhergehenden Ansprüche, wobei der Beschichtungsstoff (22, 30) mindestens einen bipolaren, vernetzten Polymer aufweist.

7. Isolierpaket (8) nach einem der vorherigen Ansprüche, wobei der Beschichtungsstoff (22, 30) einen quellfähigen Copolymer aufweist.

8. Isolierpaket (8) nach einem der vorhergehenden Ansprüche, wobei die Beschichtung (22, 30) an einer Innenseite der Abdeckung (12, 28) angeordnet ist.

9. Isolierpaket (8) nach einem der vorhergehenden Ansprüche, wobei die Abdeckung (12, 28) ein Vlies-Material als Trägermaterial aufweist.

10. Isolierpaket (8) nach einem der Ansprüche 1 bis 8, wobei die Abdeckung (12) aus einem Abschnitt der Umhüllungsfolie (6) gebildet ist, der eine mit einer Öffnungskante der zugehörigen Trocknungsöffnung zusammenfallende Kante aufweist.

11. Isolierpaket (8) nach Anspruch 10, wobei der Abschnitt randseitig eine Lasche zum Überlappen mit Rändern der zugehörigen Trocknungsöffnung (10) aufweist.

12. Isolierpaket (8) nach einem der vorhergehenden Ansprüche, wobei die Trocknungsöffhungen (10) zumindest teilweise kreisförmig, oval oder dreieckig ausgeführt sind.

13. Flugzeug (32), aufweisend einen Flugzeugrumpf (34) mit einem darin gebildeten Innenraum (36), in dem mindestens ein Isolierpaket (8) nach einem der Ansprüche 1 bis 12 angeordnet ist.

14. Flugzeug nach Anspruch 13, wobei der Flugzeugrumpf (34) eine Innenseite und eine Außenseite aufweist, wobei mehrere Isolierpakete (8) an der Innenseite des Flugzeugrumpfs (34) angeordnet sind, wobei die Trocknungsöffnungen (10) an einer von dem Flugzeugrumpf (34) abgewandten Seite der Isolierpakete (8) angeordnet sind.

15. Flugzeug nach Anspruch 13 oder 14, wobei mindestens ein Isolierpaket (8) an einem Einbauelement angeordnet ist, das in dem Innenraum (36) befestigt ist.

## Claims

1. Insulation package (8) for the thermal and acoustic insulation of an aircraft (32), comprising
- a mat (4) made of an insulation material, and
- a wrapping sheet (6), completely enveloping the mat (4), the wrapping sheet (6) having a plurality of drying openings (10), each of which is closable by a cover (12, 28) connected to the wrapping sheet (6), each cover (12, 28) having, at least zonally, a coating material (22, 30) which areal extent changes as a function of the relative humidity of the air inside the insulation package (8), so that each cover (12, 28) moves relative to the wrapping sheet (6) as a function of this humidity, and
wherein the covers (12, 28) are adapted to assume an orientation below a predetermined relative humidity which closes the associated drying opening (10) and at higher relative humidities at least partially opens the associated drying opening (10).

2. The insulation package (8) according to claim 1, wherein the cover (12) is flexible.

3. The insulation package (8) according to claim 1, wherein the cover (28) is rigid.

4. The insulation package (8) according to one of the preceding claims, wherein the coating material (22, 30) comprises an absorber which increases its volume when absorbing moisture.

5. The insulation package (8) according to claim 4, wherein the coating material (22, 30) is reversibly swellable.

6. The insulation package (8) according to one of the preceding claims, wherein the coating material (22, 30) comprises at least one bipolar, crosslinked polymer.

7. The insulation package (8) according to any one of the preceding claims, wherein the coating material (22, 30) comprises a swellable copolymer.

8. The insulation package (8) according to one of the preceding claims, wherein the coating (22, 30) is arranged on an inner side of the cover (12, 28).

9. The insulation package (8) according to one of the preceding claims, wherein the cover (12, 28) comprises a non-woven material as a carrier material.

10. The insulation package (8) according to any one of claims 1 to 8, wherein the cover (12) is formed from a portion of the wrapping film (6) having an edge coinciding with an opening edge of the associated drying opening.

11. The insulation package (8) according to claim 10, wherein the portion has a flap on the edge side for overlapping with edges of the associated drying opening (10).

12. The insulation package (8) according to one of the preceding claims, wherein the drying openings (10) are at least partially circular, oval or triangular.

13. Aircraft (32) comprising an aircraft fuselage (34) having an interior space (36) formed therein, wherein at least one insulation package (8) according to any one of claims 1 to 12 is arranged.

14. Aircraft according to claim 13, wherein the aircraft fuselage (34) comprises an inner side and an outer side, wherein a plurality of insulation packages (8) are arranged on the inner side of the aircraft fuselage (34), wherein the drying openings (10) are arranged on a side of the insulation packages (8) facing away from the aircraft fuselage (34).

15. Aircraft according to claim 13 or 14, wherein at least one insulation package (8) is arranged at an installation element fixed in the interior space (36).

## Revendications

1. Paquet d'isolation (8) pour l'isolation thermique et acoustique d'un aéronef (32), comprenant
- un tapis (4) de matériau isolant, et
- un film d'emballage (6) enveloppant complètement le tapis (4), le film d'emballage (6) présentant une pluralité d'ouvertures de séchage (10), dont chacune peut être fermée par un couvercle (12, 28) relié au film d'emballage (6),
chaque couvercle (12, 28) comportant, au moins par endroits, un matériau de revêtement (22, 30) dont l'étendue en surface varie en fonction de l'humidité relative de l'air à l'intérieur de l'emballage isolant (8), de sorte que chaque couvercle (12, 28) se déplace par rapport au film d'emballage (6) en fonction de cette humidité, et
dans lequel les couvercles (12, 28) sont adaptés pour prendre une orientation en dessous d'une humidité relative prédéterminée qui ferme l'ouverture de séchage associée (10) et, à des humidités relatives plus élevées, ouvre au moins partiellement l'ouverture de séchage associée (10).

2. Paquet d'isolation (8) selon la revendication 1, dans lequel la couverture (12) est flexible.

3. Paquet d'isolation (8) selon la revendication 1, dans lequel le couvercle (28) est rigide.

4. Paquet d'isolation (8) selon l'une quelconque des revendications précédentes, dans lequel le matériau de revêtement (22, 30) comprend un absorbeur qui augmente son volume lors de l'absorption augmente son volume lorsque l'humidité est absorbée.

5. Paquet d'isolation (8) selon la revendication 4, dans lequel le matériau de revêtement (22, 30) est gonflable de manière réversible.

6. Paquet d'isolation (8) selon l'une quelconque des revendications précédentes, dans lequel le matériau de revêtement (22, 30) comprend au moins un polymère réticulé bipolaire.

7. Paquet d'isolation (8) selon l'une quelconque des revendications précédentes, dans lequel le matériau de revêtement (22, 30) comprend un copolymère gonflable.

8. Paquet d'isolation (8) selon l'une quelconque des revendications précédentes, dans lequel le revêtement (22, 30) est disposé sur un côté intérieur de la couverture (12, 28).

9. Paquet d'isolation (8) selon l'une des revendications précédentes, dans lequel la couverture (12, 28) comprend un matériau non tissé comme support.

10. Paquet d'isolation (8) selon l'une quelconque des revendications 1 à 8, dans lequel la couverture (12) est formée à partir d'une partie du film d'emballage (6) dont le bord coïncide avec un bord de l'ouverture de séchage associée.

11. Paquet d'isolation (8) selon la revendication 10, dans lequel ladite partie a un rabat sur le côté du bord pour chevaucher les bords de l'ouverture de séchage associée (10).

12. Paquet d'isolation (8) selon l'une des revendications précédentes, dans lequel les ouvertures de séchage (10) sont au moins partiellement circulaires, ovales ou triangulaires.

13. Aéronef (32) comprenant un fuselage d'aéronef (34) dans lequel est formé un espace intérieur (36), dans lequel est disposé au moins un paquet d'isolation (8) selon l'une quelconque des revendications 1 à 12.

14. Aéronef selon la revendication 13, dans lequel le fuselage de l'aéronef (34) comprend un côté intérieur et un côté extérieur, dans lequel une pluralité de paquets d'isolation (8) sont disposés sur le côté intérieur du fuselage de l'aéronef (34), dans lequel les ouvertures de séchage (10) sont disposées sur un côté des paquets d'isolation (8) opposé au fuselage de l'aéronef (34).

15. Aéronef selon la revendication 13 ou 14, dans lequel au moins un paquet d'isolation (8) est disposé sur un élément d'installation fixé dans l'espace intérieur (36).
